# FASCICULE DE BREVET EUROPEEN

(11) **EP 3 423 978 B1**
(45) Date de publication et mention de la délivrance du brevet: **25.12.2024**
(21) Numéro de dépôt: 17707038.0
(22) Date de dépôt: 27.02.2017
(51) Int. Cl.: H04L 49/9015, G06F 9/44, G09G 5/00, G06F 9/445, G06T 13/00, G06F 3/14, G09G 5/395, G09G 5/393

(54) **PROCEDE DE D'AFFICHAGE D'UNE ANIMATION LORS DE LA PHASE DE DEMARRAGE D'UN DISPOSITIF ELECTRONIQUE ET DISPOSITIF ELECTRONIQUE ASSOCIE**
VERFAHREN EINE ANIMATION ZUM ANZEIGEN WAHREND DEM START EINES GERÄTS
DISPLAYING AN ANIMATION WHILE BOOTING A DEVICE

(30) Priorité: 29.02.2016 FR 1651662
(43) Date de publication de la demande: 09.01.2019
(73) Titulaire: Sagemcom Broadband SAS, 92270 Bois-Colombes (FR)
(72) Inventeur: BELLANGER, Julien, 92270 Bois-Colombes (FR)
(74) Mandataire: Cabinet Boettcher
(86) Numéro de dépôt international: PCT/EP2017/054491
(87) Numéro de publication internationale: WO 2017/148856

(56) Documents cités:
- CN-A- 1 917 571
- CN-A- 101 827 199
- US-A- 4 404 554
- US-A1- 2008 001 970
- US-A1- 2010 220 743
- "Buffer mechanism for pel positioning of multiple video images, including overlapping, on a raster-scan crt", IBM TECHNICAL DISCLOSURE BULLETIN, INTERNATIONAL BUSINESS MACHINES CORP. (THORNWOOD), US, vol. 29, no. 11, 1 April 1987 (1987-04-01), pages 4714 - 4717, XP002088245, ISSN: 0018-8689

## Description

### DOMAINE TECHNIQUE DE L'INVENTION

Le domaine technique de l'invention est celui des dispositifs électroniques destinés à être connecté à un moyen d'affichage. La présente invention concerne un procédé d'affichage d'une animation par un dispositif électronique pour terminal et en particulier un procédé d'affichage d'une animation lors de la phase de démarrage d'un boitier électronique. L'invention concerne également un dispositif mettant en oeuvre ledit procédé.

### ARRIERE-PLAN TECHNOLOGIQUE DE L'INVENTION

Le démarrage d'un dispositif électronique se fait en plusieurs étapes. Tout d'abord le système élémentaire d'entrée/sortie initialise la mémoire vive. Une fois l'étape d'initialisation terminée, le système élémentaire d'entrée/sortie charge un programme de démarrage ou programme de boot dans la mémoire vive. Ce programme de boot a pour rôle d'initialiser les périphériques tels qu'une puce d'affichage et de charger le système d'exploitation en mémoire vive. Cependant, le système d'exploitation mettant en oeuvre le dispositif n'est pas immédiatement opérationnel. En conséquence, lors des premiers instants suivant la mise en route du dispositif, le système d'exploitation ne dispose pas encore de l'accès aux pilotes de la puce d'affichage et ne peut donc pas contrôler la puce d'affichage pour informer par exemple de l'état d'avancement du démarrage. Cependant, durant ces premiers instants, le programme de boot peut être programmé pour configurer de manière statique les registres de la puce de sortie vidéo afin d'afficher une image témoignant de la mise en route du dispositif.

Afin de produire une image, une puce d'affichage possède généralement deux registres : un registre de sortie vidéo et un registre d'affichage. Le registre de sortie vidéo peut être configuré pour effectuer un affichage progressif ou un affichage entrelacé. Lorsque le registre de sortie vidéo est configuré pour un affichage progressif, l'affichage d'une image se fait ligne par ligne. Lorsque le registre de sortie vidéo est configuré pour un affichage entrelacé, l'image est divisée en une première trame dite trame impaire comprenant les lignes impaires de l'image et une deuxième trame dite trame paire comprenant les lignes paires de l'image, et l'affichage de l'image se fait d'abord par affichage de la trame impaire puis ensuite par affichage de la trame paire. Le registre d'affichage contient une table chainée de configuration, autrement appelé noeud, ce noeud contenant notamment l'adresse en mémoire de l'image (dans le cas d'un affichage en mode progressif) ou de la trame à afficher (dans le cas d'un affichage en mode entrelacé), le choix du mode d'affichage au travers du registre de sortie vidéo conditionnant la configuration du registre d'affichage.

Dans le cadre d'un affichage progressif, le noeud contenu dans le registre d'affichage comprend l'adresse en mémoire de l'image à afficher, mais également sa propre adresse ou, autrement dit, le noeud pointe sur lui-même. L'affichage se fait donc en parcourant le noeud de manière continue.

Dans le cadre d'un affichage entrelacé, le registre d'affichage contient un premier noeud comprenant l'adresse de la trame impaire de l'image à afficher et permet l'affichage des lignes impaires de cette image. Ce premier noeud comprend également l'adresse en mémoire du deuxième noeud. Le deuxième noeud contient l'adresse de la trame paire de l'image à afficher et permet l'affichage des lignes paires de cette image. Le deuxième noeud comprend également l'adresse en mémoire du premier noeud. L'affichage se fait donc en parcourant le premier noeud puis en parcourant le deuxième noeud conduisant à l'affichage des lignes impaires puis des lignes paires de l'image à afficher. Ainsi, par opposition à l'affichage progressif, l'affichage alterne entre l'affichage des lignes impaires (ou trame impaire) et l'affichage des lignes paires (ou trame paire) d'une même image.

Cependant, la programmation des registres se faisant de manière statique, il n'est pas possible d'afficher une animation, une animation nécessitant au moins deux images. Il est donc connu d'afficher une image statique durant la phase de démarrage, l'affichage de cette image pouvant se faire soit par l'intermédiaire d'un affichage en mode entrelacé soit par l'intermédiaire d'un affichage en mode progressif. L'animation ne peut donc apparaitre sur le dispositif d'affichage que lorsque le système d'exploitation a accès aux pilotes de la puce d'affichage. Selon le système d'exploitation et les mesures de sécurité mises en place, cette animation n'apparait que 5 à 15 secondes après le lancement effectif du dispositif électronique. Durant cet intervalle, il est fréquent que l'utilisateur assimile l'image fixe à un dysfonctionnement du boitier électronique et débranche ce dernier au cours de la séquence de démarrage. Le document "Buffer mechanism for pel positioning of multiple video images, including overlapping, on a raster-scan crt", IBM TECHNICAL DISCLOSURE BULLETIN, INTERNATIONAL BUSINESS MACHINES CORP. (THORNWOOD), US, vol. 29, no. 11, 1 avril 1987 (1987-04-01), pages 4714-4717, décrit un mécanisme de tampon permettant de positionner plusieurs images vidéo, y compris celles qui se chevauchent, sur un écran CRT à balayage de trame. Le système utilise cinq composants principaux (Chargeur, Tampon VDE, Transformateur, Tampon de balayage et Afficheur) pour gérer efficacement le stockage, la transformation et l'affichage des éléments vidéo définis (VDE), permettant ainsi un positionnement précis des pixels et la superposition contrôlée des images.

Il existe donc un besoin lié à l'affichage d'une animation lors des tout premiers instants de la phase de démarrage d'un dispositif électronique, c'est-à-dire avant que le système d'exploitation ne prenne le contrôle de l'affichage, témoignant du bon déroulé dudit démarrage.

### RESUME DE L'INVENTION

L'invention offre une solution aux problèmes évoqués précédemment, en proposant un procédé de programmation permettant l'affichage d'une animation dès les premiers instants de la phase de démarrage.

Pour cela, l'invention propose un procédé d'affichage d'une animation par une puce d'affichage d'un dispositif électronique, ledit dispositif électronique comprenant une mémoire non-volatile et une mémoire vive, ladite puce d'affichage comportant un registre de sortie vidéo et un registre d'affichage ; le procédé comportant une première phase de programmation statique comprenant :
- une étape de configuration du registre de sortie vidéo ;
- une étape d'écriture de *n* images dans la mémoire vive, *n* étant un entier supérieur ou égal à deux ;

- une étape d'écriture dans la mémoire vive d'une pluralité de noeuds de sorte que chaque noeud comprend l'adresse en mémoire vive d'au moins une partie d'une image parmi les n images ainsi que l'adresse en mémoire vive du noeud suivant, le dernier noeud comprenant l'adresse en mémoire vive du premier noeud ;
- une étape de configuration du registre d'affichage.

Le procédé comporte également une deuxième phase de lecture des n images par ladite puce d'affichage, ladite lecture se faisant à l'aide du registre d'affichage de sorte à afficher ladite animation.

Ainsi, les n images sont affichées successivement générant une animation dès les premiers instants du démarrage du dispositif. En effet, étant donné que chaque noeud comprend également une adresse d'au moins une partie d'une image parmi les n images, on obtient l'affichage d'une succession d'images donnant lieu à une animation. On entend par au moins une partie d'une image le fait qu'un noeud puisse contenir l'adresse mémoire d'une trame paire ou impaire d'une image ou l'adresse mémoire d'une image. En outre, l'animation est basée sur une programmation statique des registres d'affichage et tire ingénieusement avantage du mode de lecture progressif ou entrelacé afin d'afficher une animation. Il n'est donc pas nécessaire d'adapter la puce d'affichage au procédé de l'invention.

L'invention propose également un dispositif électronique comprenant une mémoire non-volatile, une mémoire vive et une puce d'affichage, ladite puce d'affichage comportant un registre de sortie vidéo et un registre d'affichage. Le dispositif comprend en outre des moyens pour mettre en oeuvre le procédé selon l'invention.

On entend par dispositif électronique tout dispositif électronique destiné à être connecté à un moyen d'affichage. Le dispositif électronique selon l'invention peut par exemple consister en un boitier électronique destiné à être connecté à une télévision comme une STB (de l'anglais Set Top Box). De manière alternative, le dispositif d'affichage peut être incorporé au dispositif électronique. Par exemple, le dispositif électronique selon l'invention peut consister en un ordiphone (ou Smartphone en anglais). En outre, on entend par puce d'affichage, une puce qui comporte notamment un ou plusieurs moyens de connexion à un dispositif d'affichage. Par exemple, la puce d'affichage peut comprendre un port HDMI ou bien encore VGA.

L'invention propose également un produit programme d'ordinateur comprenant des instructions qui conduisent le dispositif selon l'invention à exécuter les étapes du procédé d'affichage selon l'invention.

L'invention propose également un support lisible par ordinateur, sur lequel est enregistré le programme d'ordinateur selon l'invention.

Outre les caractéristiques qui viennent d'être évoquées dans le paragraphe précédent, le procédé d'affichage selon un aspect de l'invention peut présenter une ou plusieurs caractéristiques complémentaires parmi les suivantes, considérées individuellement ou selon toutes les combinaisons techniquement possibles.

Avantageusement, un programme de démarrage en charge du démarrage d'un système d'exploitation est stocké dans la mémoire non-volatile, le dispositif électronique comportant un système élémentaire d'entrée/sortie configuré pour charger en mémoire vive ledit programme de démarrage, les n images étant incluses dans ledit programme de démarrage de manière que l'étape d'écriture des n images dans la mémoire vive se fait lors du chargement dudit programme de démarrage par ledit système élémentaire d'entrée/sortie.

Ainsi, la mise en mémoire du programme de démarrage et des images composants l'animation à afficher s'effectue en une seule étape.

Avantageusement, l'étape de configuration du registre de sortie vidéo et du registre d'affichage est effectuée par le système élémentaire d'entrée/sortie. Ainsi, l'affichage de l'animation peut avoir lieu dès le chargement du programme de démarrage.

De manière alternative, un programme de démarrage en charge du démarrage d'un système d'exploitation est stocké dans la mémoire non-volatile, le dispositif électronique comportant un système élémentaire d'entrée/sortie configuré pour charger en mémoire vive ledit programme de démarrage, les n images étant stockées dans la mémoire non-volatile et l'étape d'écriture des n images dans la mémoire vive se faisant par copie des images stockées dans la mémoire non-volatile vers la mémoire vive par le programme de démarrage.

Ainsi, il est possible d'obtenir une animation comportant un nombre d'images important sans pour autant ralentir le chargement du programme de démarrage, le chargement en mémoire de ce dernier se faisant de manière indépendante du chargement des images composant l'animation.

Avantageusement, l'étape de configuration du registre de sortie vidéo et du registre d'affichage est effectuée par le programme de démarrage. Ainsi, l'affichage de l'animation peut avoir lieu dès le chargement du programme de démarrage.

Avantageusement, les n images sont stockées sous forme d'images compressées. Ainsi, on réduit l'empreinte mémoire des images ainsi compressées.

De manière préférentielle, l'écriture des n images dans la mémoire vive se fait dans une zone dédiée de la mémoire vive. Ainsi, on évite que l'espace mémoire contenant les images soit alloué au système d'exploitation lors de son chargement. L'animation peut donc se poursuivre même après le chargement du système d'exploitation ce qui laisse le temps au système d'exploitation de charger les pilotes de la puce d'affichage. On évite donc une interruption de l'animation durant la phase de démarrage.

Avantageusement, la configuration du registre de sortie vidéo lors de l'étape de configuration du registre de sortie vidéo est effectuée de sorte que l'affichage se fait en mode progressif et en ce que chaque noeud comprend l'adresse d'une image.

Ainsi, on obtient une animation de meilleure qualité qu'une animation de même résolution en mode entrelacé.

Avantageusement, l'animation est décomposée en un premier plan graphique et un deuxième plan graphique, le premier plan graphique constituant une partie fixe de l'animation et le deuxième plan graphique constituant une partie changeante de l'animation, la puce d'affichage comportant des moyens pour superposer le premier plan graphique au deuxième plan graphique ; et en ce que l'étape d'écriture dans la mémoire vive d'une pluralité de noeuds comprend deux sous-étapes :
- une première sous-étape d'écriture d'un noeud comprenant l'adresse en mémoire vive MV d'une image destinée à être affichée dans le premier plan graphique, le noeud comprenant en outre sa propre adresse en mémoire vive MV ;
- une deuxième sous-étape d'écriture d'une pluralité de noeuds Ni, chaque noeud comprenant l'adresse en mémoire vive MV d'une image destinée à être affichée dans le deuxième plan graphique ainsi que l'adresse en mémoire vive MV du noeud suivant, le dernier noeud comprenant l'adresse en mémoire vive MV du premier noeud.

Avantageusement, la configuration du registre de sortie vidéo lors de l'étape de configuration du registre de sortie vidéo est effectuée de sorte que l'affichage se fait en mode entrelacé, la pluralité de noeuds comportant des noeuds pairs et des noeuds impairs, et chaque noeud impair comprenant l'adresse d'une trame impaire d'une image et chaque noeud pair comprend l'adresse d'une trame paire d'une image.

L'utilisation du mode entrelacé permet d'afficher une animation dans une résolution élevée même si la bande passante de la connexion vidéo reliant la puce d'affichage à un moyen d'affichage est faible.

Avantageusement, l'animation est décomposée en un premier plan graphique et un deuxième plan graphique, le premier plan graphique constituant la partie fixe de l'animation et le deuxième plan graphique constituant la partie changeante de l'animation, la puce d'affichage comportant des moyens pour superposer le premier plan graphique au deuxième plan graphique ; et en ce que l'étape d'écriture dans la mémoire vive d'une pluralité de noeuds comprend deux sous-étapes :
- une première sous-étape d'écriture d'un premier noeud et d'un deuxième noeud, le premier noeud comprenant l'adresse en mémoire vive de la trame impaire d'une image destinée à être affichée dans le premier plan graphique ainsi que l'adresse en mémoire vive du deuxième noeud, le deuxième noeud comprenant l'adresse en mémoire vive de la trame paire de l'image destinée à être affichée dans le premier plan graphique ainsi que l'adresse en mémoire vive du premier noeud ;
- une deuxième sous-étape d'écriture d'une pluralité de noeuds, chaque noeud impair comprenant l'adresse en mémoire vive de la trame impaire d'une image destinée à être affichée dans le deuxième plan graphique et chaque noeud pair comprenant l'adresse en mémoire vive de la trame paire d'une image destinée à être affichée dans le deuxième plan graphique, le dernier noeud comprenant l'adresse en mémoire vive du premier noeud.

Ainsi, on évite de stocker en mémoire les éléments redondants entre deux images, les éléments redondants composant la partie fixe de l'animation.

Utilisation d'une animation prenant en compte le premier plan graphique et le deuxième plan graphique permet donc d'économiser de la mémoire.

### BREVE DESCRIPTION DES FIGURES

Les figures sont présentées à titre indicatif et nullement limitatif de l'invention et illustrent :
- la figure 1, un dispositif électronique mettant en oeuvre un procédé selon l'invention ainsi qu'un exemple de noeud ;
- la figure 2, un ordinogramme d'un mode de réalisation du procédé selon l'invention ;
- la figure 3, un premier exemple de réalisation du procédé selon l'invention ;
- la figure 4, un deuxième exemple de réalisation du procédé selon l'invention.

### DESCRIPTION DETAILLEE D'AU MOINS UN MODE DE REALISATION DE L'INVENTION

Sauf précision contraire, un même élément apparaissant sur des figures différentes présente une référence unique.

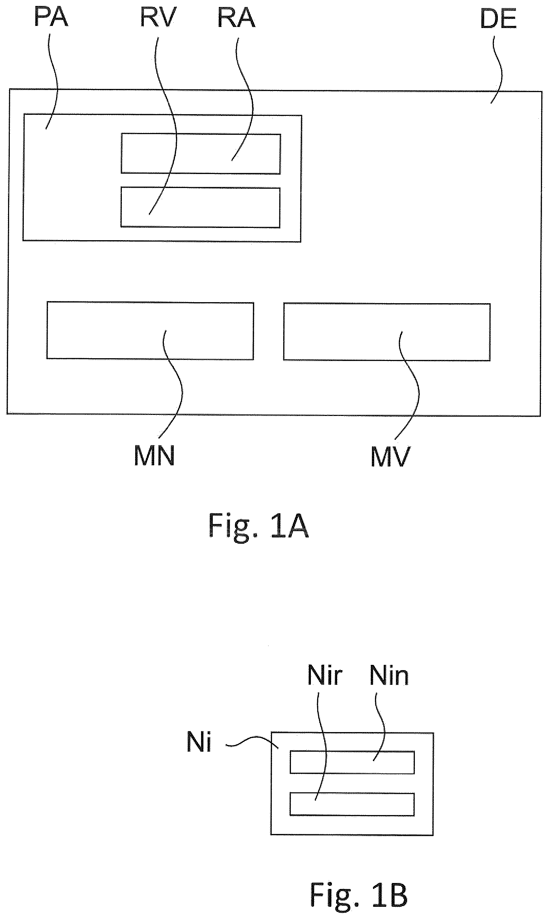

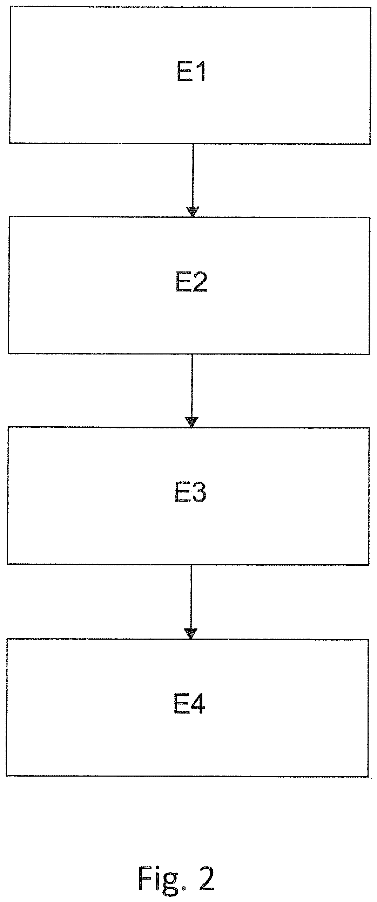

Selon un premier mode de réalisation illustré dans les figures 1A-B et 2, l'invention concerne un dispositif électronique DE comprenant une mémoire non-volatile MN, une mémoire vive MV et une puce d'affichage PA, ladite puce d'affichage PA comportant un registre de sortie vidéo RV et un registre d'affichage RA. L'invention concerne également un procédé d'affichage à l'aide d'une puce d'affichage destiné à être mise en oeuvre dans un tel dispositif électronique.

La mémoire vive MV peut consister en une mémoire dédiée de la puce PA ou bien encore à une mémoire RAM (pour Random Access Memory en anglais) destinée à un système d'exploitation. La mémoire non-volatile MN peut consister en un disque dur ou une mémoire flash.

Le procédé selon l'invention comprend une première phase de programmation statique comportant une étape E1 de configuration du registre de sortie vidéo RV. Cette étape peut par exemple consister en une configuration du registre de sortie vidéo RV de sorte à obtenir un affichage progressif ou entrelacé.

La première phase du procédé comprend en outre une étape E2 d'écriture de n images dans la mémoire vive MV, *n* étant un entier supérieur ou égal à deux. Une animation se composant d'au moins deux images, il est en effet nécessaire dans cette étape que l'écriture concerne au moins deux images. Ainsi, lors de cette étape, les images composant l'animation sont recopiées de la mémoire non-volatile MN vers la mémoire vive MV.

La première phase du procédé comprend en outre une étape E3 d'écriture dans la mémoire vive d'une pluralité de noeuds Ni. On entend ici par pluralité de noeuds Ni une table chainée de configuration de sorte que chaque noeud Ni comprend l'adresse en mémoire vive Nin d'au moins une partie d'une image ainsi que l'adresse en mémoire vive Nir du noeud suivant, le dernier noeud comprenant alors l'adresse en mémoire vive du premier noeud N1.

La première phase du procédé comprend également une étape E4 de configuration du registre d'affichage RA. Cette étape peut consister à copier dans le registre d'affichage RA le premier noeud de la pluralité de noeuds Ni chargée en mémoire vive.

Le procédé selon l'invention comprend également une deuxième phase de lecture des n images par ladite puce d'affichage (PA), ladite lecture se faisant à l'aide du registre d'affichage (RA) de sorte à afficher ladite animation.

Dans le procédé selon l'invention, la configuration des registres s'effectue de manière statique. Autrement dit, une fois configurés, les registres ne sont plus reconfigurés et l'animation se produit en tirant avantage du fonctionnement de la puce d'affichage. Autrement dit, le procédé selon l'invention peut être utilisé sans adaptation particulière de la puce d'affichage et permet à cette dernière d'afficher une animation à travers une configuration statique du registre d'affichage et du registre de sortie vidéo.

En effet, comme expliqué précédemment, la puce d'affichage PA affiche l'image ou la partie d'image dont l'adresse est comprise dans un premier noeud chargé dans le registre d'affichage RA. Une fois cette image ou cette partie d'image affichée, un deuxième noeud dont l'adresse en mémoire vive MV est comprise dans le premier noeud est à son tour chargé dans le registre d'affichage RA. De cette manière, la puce copie depuis la mémoire vive dans le registre d'affichage de manière successive les noeuds de la pluralité de noeuds Ni.

On comprend donc que l'étape E3 d'écriture de la pluralité de noeuds Ni est fonction du mode d'affichage choisi lors de l'étape E1 de configuration du registre de sortie vidéo RV.

Dans un mode de réalisation, le mode d'affichage est un mode d'affichage progressif. L'étape d'écriture E3 de la pluralité de noeuds Ni est alors effectuée de sorte que chaque noeud Ni comprend l'adresse Nin d'une image ainsi que l'adresse Nir du noeud suivant, le dernier noeud comprenant l'adresse du premier noeud N1. En configurant les noeuds Ni de la sorte et l'affichage se faisant en mode progressif, la lecture d'un noeud Ni par la puce d'affichage PA conduit à l'affichage d'une image. Chaque noeud Ni étant relatif à une image, l'animation va se faire par la lecture, par la puce d'affichage PA, de la pluralité de noeuds Ni. En prenant l'exemple d'une vitesse de rafraichissement de 60Hz, la vitesse maximale d'animation est donc de 30 cycles par seconde. On peut cependant envisager de configurer les noeuds Ni de sortes qu'une pluralité de noeuds pointe vers une même image afin de pouvoir moduler la vitesse d'animation.

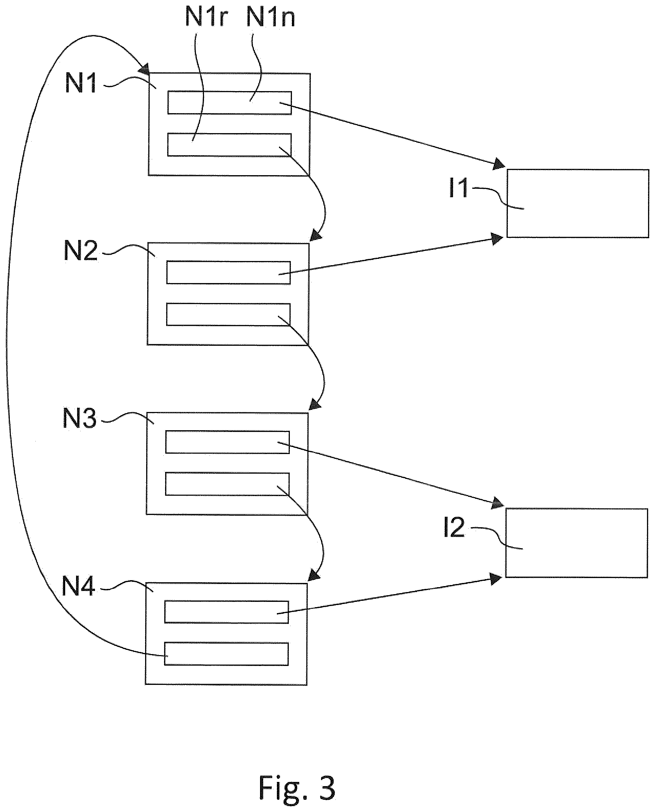

Dans un exemple de réalisation illustré à la figure 3, le premier noeud N1 comporte l'adresse en mémoire vive N1n de l'image I1 ainsi que l'adresse en mémoire vive du noeud suivant N2. Le noeud N2 comprend l'adresse en mémoire vive de l'image 11 ainsi que l'adresse en mémoire vive du noeud suivant N3. Le troisième noeud N3 comprend l'adresse mémoire vive de l'image I2 ainsi que l'adresse mémoire vive du noeud N4. Le noeud N4 comprend l'adresse mémoire vive de l'image I2 ainsi que l'adresse en mémoire vive du premier noeud N1, le noeud N4 étant le dernier noeud de la pluralité de noeuds. En parcourant les quatre noeuds N1, N2, N3, N4, la puce d'affichage PA affiche successivement et de manière cyclique deux images 11, I2 produisant ainsi une animation. Dans le cas où la vitesse de rafraichissement est de 60Hz, on obtient ainsi une animation d'une durée de 1/15 de seconde, autrement dit 15 cycles d'animation par seconde. On peut également configurer les noeuds de sorte que les 30 premiers noeuds comprennent l'adresse en mémoire vive d'une première image et les 30 noeuds suivants comprennent l'adresse en mémoire vive d'une deuxième image. Dans ce cas, la vitesse d'animation n'est plus que de 2 images par seconde, autrement dit un cycle d'animation par seconde. Ainsi, le déroulé de l'animation peut être modulé en modifiant le nombre de noeuds comportant l'adresse en mémoire vive des différentes images composant l'animation.

Dans un mode de réalisation alternatif, le mode d'affichage est un mode d'affichage entrelacé et chaque image est divisée en une première trame dite trame impaire comprenant les lignes impaires de l'image et une deuxième trame dite trame paire comprenant les lignes paires de l'image. L'étape d'écriture E3 de la pluralité de noeuds Ni est alors effectuée de sorte que chaque noeud Ni comprend l'adresse en mémoire vive Nin d'une trame d'une image ainsi que l'adresse en mémoire vive Nir du noeud suivant, le dernier noeud comprenant l'adresse en mémoire vive Nir du premier noeud N1. En configurant les noeuds Ni de la sorte, on s'assure que les trames des images vont être affichées les unes après les autres. L'affichage se faisant en mode entrelacé, la lecture d'un noeud Ni conduit à l'affichage d'une trame. Il faut donc parcourir deux noeuds pour afficher une image. Chaque noeud Ni étant relatif à une trame d'une image, l'animation comprenant *n* images va se faire par la lecture d'au moins 2*n* noeuds.

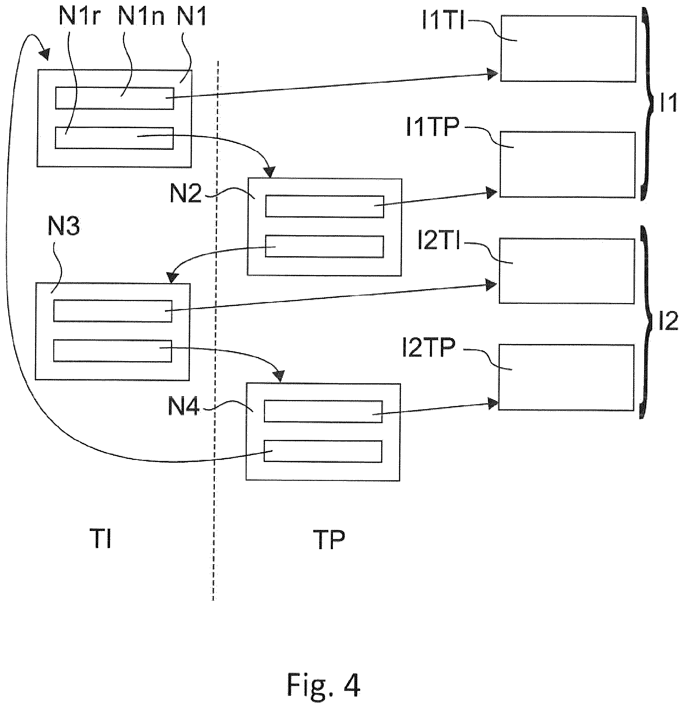

Dans un exemple illustré à la figure 4, les noeuds N1 et N3 correspondent chacun à une trame impaire Tl et les noeuds N2 et N4 correspondent chacun à une trame paire TP. Le premier noeud N1 comprend l'adresse en mémoire vive N1n de la trame impaire I1TI d'une première image I1 ainsi que l'adresse en mémoire vive N1r du deuxième noeud N2. Le deuxième noeud N2 comprend l'adresse mémoire vive de la trame paire I1TP de l'image I1 ainsi que l'adresse mémoire vive du noeud N3. Le noeud N3 comprend l'adresse en mémoire vive de la trame impaire I2TI d'une deuxième image I2 ainsi que l'adresse en mémoire vive du quatrième noeud N4. Le noeud N4 comprend l'adresse en mémoire vive de la trame paire I2TP de l'image I2 ainsi que l'adresse en mémoire vive du premier noeud N1, le noeud N4 étant le dernier noeud. Si l'on suppose un rafraichissement de l'affichage de 60Hz, on obtient une alternance entre les deux images toutes les 1/15 de seconde. Autrement dit, la vitesse maximale d'animation est de 15 cycles par seconde. On peut cependant envisager de configurer les noeuds Ni de sorte qu'une pluralité de noeuds Ni pointe vers une même image afin de pouvoir moduler la vitesse d'animation. Autrement dit, un premier noeud pointe vers la trame impaire d'une image et le noeud suivant pointe vers la trame paire de la même image, et ce de manière répétée sur plusieurs couples de noeuds consécutifs. On peut par exemple configurer les noeuds de sorte que les 30 premiers noeuds pointent vers une première image (15 des noeuds pointant vers la trame impaire de la première image et 15 noeuds pointant vers la trame paire de la première image) et les 30 noeuds suivants pointent vers une deuxième image (15 des noeuds pointant vers la trame impaire de la première image et 15 noeuds pointant vers la trame paire de la première image). Alors, la vitesse d'animation n'est plus que de 2 images par seconde. Autrement dit, la vitesse d'animation n'est plus que de 1 cycle par seconde.

Quel que soit le mode d'affichage choisi, l'étape E2 d'écriture de n images dans la mémoire vive RV peut se faire de deux manières distinctes.

Dans un mode de réalisation, un programme de démarrage est en charge du chargement en mémoire d'un système d'exploitation et les n images sont stockées dans ledit programme de démarrage. Ces dernières sont donc écrites en mémoire vive MV en même temps que le programme de démarrage. Autrement dit, dans ce mode de réalisation, le chargement des images en mémoire vive MV est effectué par le système élémentaire d'entrée/sortie. Les images étant disponibles dès le chargement en mémoire du programme de démarrage, le système élémentaire d'entrée/sortie peut être également en charge de l'étape de configuration des registres ce qui permet d'avoir un affichage de l'animation dès les premiers instants du démarrage immédiatement après le chargement du programme de démarrage, et donc des images, dans la mémoire vive MV. Ce mode de réalisation permet de charger en mémoire l'ensemble des éléments nécessaires à l'affichage en une seule étape. Le système élémentaire d'entrée/sortie pourra être un BIOS (de l'anglais Basic Input Output System) ou bien un coprocesseur de sécurité. On entend par coprocesseur de sécurité une unité logique en charge de l'initialisation de la mémoire vive MV, de la vérification du programme de démarrage par vérification d'une empreinte de ce dernier, et de la mise en mémoire vive MV du programme de démarrage. Cependant, si le nombre ou la résolution des images est élevé, la taille mémoire du programme de démarrage auquel ont été incorporées les images peut devenir importante ce qui peut ralentir l'opération de vérification de l'intégrité du programme de démarrage par le système élémentaire d'entrée/sortie.

On peut alors envisager un autre mode de réalisation dans lequel les n images sont stockées dans la mémoire non-volatile MN du dispositif électronique DE indépendamment du programme de démarrage et sont chargées en mémoire vive MV après le chargement du programme de démarrage par ledit programme de démarrage. Ainsi, l'empreinte mémoire du programme de démarrage est réduite. Dans ce mode de réalisation, le programme de démarrage peut être en charge de la configuration des registres de sortie vidéo RV et d'affichage RA.

Dans un mode de réalisation, les n images sont stockées sous forme d'images compressées ce qui permet de réduire l'empreinte mémoire des images. On peut par exemple envisager un algorithme de compression de type à codage par plage ou LRE (pour Run Length Encoding en anglais). De manière plus générale, tout algorithme de compression supporté par la puce d'affichage PA peut être utilisé. Il peut donc s'agir également d'un algorithme de compression propriétaire.

Dans un mode de réalisation, l'écriture des n images dans la mémoire vive se fait dans une zone dédiée de la mémoire vive MV. Ceci permet de conserver les images en mémoire une fois le système d'exploitation chargé en prévenant tout écrasement des images par au moins une partie du code du système d'exploitation. En effet, il existe un délai entre le moment où le système d'exploitation est chargé en mémoire et le moment où le système d'exploitation prend effectivement le contrôle de la puce d'affichage PA. S'assurer que les images restent en mémoire après le chargement du système d'exploitation permet de garantir que l'animation restera affichée jusqu'à la prise de contrôle effective de la puce d'affichage par le système d'exploitation.

Dans un mode de réalisation, l'animation peut être décomposée en un premier plan graphique et un deuxième plan graphique, le premier plan graphique constituant la partie fixe de l'animation et le deuxième plan graphique constituant la partie changeante de l'animation, la puce d'affichage comportant des moyens pour superposer le premier plan graphique au deuxième plan graphique.

Lorsque l'affichage s'effectue en mode progressif, l'étape d'écriture dans la mémoire vive d'une pluralité de noeuds comprend alors deux sous-étapes :
- une première sous-étape d'écriture d'un noeud comprenant l'adresse en mémoire vive MV d'une image destinée à être affichée dans le premier plan graphique, le noeud comprenant en outre sa propre adresse en mémoire vive ;
- une deuxième sous-étape d'écriture d'une pluralité de noeuds Ni, chaque noeud comprenant l'adresse en mémoire vive MV d'une image destinée à être affichée dans le deuxième plan graphique ainsi que l'adresse en mémoire vive MV du noeud suivant, le dernier noeud comprenant l'adresse en mémoire vive MV du premier noeud.

De manière alternative, lorsque l'affichage s'effectue en mode entrelacé, l'étape d'écriture dans la mémoire vive d'une pluralité de noeuds comprend deux sous-étapes :
- une première sous-étape d'écriture d'un premier noeud et d'un deuxième noeud, le premier noeud comprenant l'adresse en mémoire vive MV de la trame impaire d'une image destinée à être affichée dans le premier plan graphique ainsi que l'adresse en mémoire vive MV du deuxième noeud, le deuxième noeud comprenant l'adresse en mémoire vive MV de la trame paire de l'image destinée à être affichée dans le premier plan graphique ainsi que l'adresse en mémoire vive MV du premier noeud ;
- une deuxième sous-étape d'écriture d'une pluralité de noeuds Ni, chaque noeud impair comprenant l'adresse en mémoire vive MV de la trame impaire d'une image destinée à être affichée dans le deuxième plan graphique et chaque noeud pair comprenant l'adresse en mémoire vive MV de la trame paire d'une image destinée à être affichée dans le deuxième plan graphique, le dernier noeud comprenant l'adresse en mémoire vive MV du premier noeud.

Ainsi, dans ces deux modes alternatifs de réalisation, l'animation n'est possible que dans la mesure où le nombre d'images est supérieur à trois. En effet, l'animation se décompose en deux parties : une première partie relative aux éléments fixes de l'animation qui viendra constituer le premier plan graphique, une deuxième partie relative aux éléments mobile de l'animation. Par exemple, dans le cas d'une animation comportant un fond sur lequel un point clignote, le premier plan sera constitué du fond et le deuxième plan graphique sera constitué du point clignotant. Dans cet exemple, l'affichage du fond, c'est-à-dire du premier plan graphique, se fera à l'aide d'un noeud unique ou un couple de noeud comportant l'adresse en mémoire vive de l'image du fond tandis que l'affichage du deuxième plan graphique se fera à l'aide de d'une pluralité de noeuds Ni comme expliqué précédemment. Il s'agit bien entendu d'un exemple et on pourra envisager un deuxième plan constitué d'une animation plus complexe comportant un nombre d'images plus important éventuellement associé à un nombre de noeuds plus grand.

Dans ces deux modes de réalisation alternatif, l'étape E4 de configuration du registre d'affichage RA peut consister à attribuer un emplacement mémoire du registre d'affichage RA à chaque plan graphique, à copier dans un premier emplacement du registre d'affichage RA le noeud (dans le cas d'un affichage progressif) ou le premier noeud du couple de noeuds (dans le cas d'un affichage entrelacé) correspondant au premier plan graphique et à copier dans un deuxième emplacement mémoire du registre d'affichage RA le premier noeud de la pluralité de noeuds Ni chargée en mémoire vive MV correspondant au deuxième plan graphique. La lecture de chacun de ces emplacements mémoire s'effectue de la même manière que dans le cas d'un plan graphique unique décrit précédemment, c'est-à-dire en affichant l'image ou la trame de l'image dont l'adresse en mémoire vive MV est contenue dans un premier noeud et en chargeant ensuite le noeud suivant dont l'adresse en mémoire vive MV est contenue dans le premier noeud. La lecture se faisant simultanément sur les deux emplacements mémoire, on obtient l'affichage de deux plans graphiques, le deuxième plan graphique venant se superposer au premier plan graphique.

## Revendications

1. Procédé d'affichage d'une animation par une puce d'affichage (PA) d'un dispositif électronique (DE), ledit dispositif électronique (DE) comprenant une mémoire non-volatile (MN) et une mémoire vive (MV), ladite puce d'affichage (PA) comportant un registre de sortie vidéo (RV) et un registre d'affichage (RA) ; le procédé étant exécuté au démarrage du dispositif (DE) et étant **caractérisé en ce qu'**il comprend une première phase de programmation comprenant :
- une étape (E1) de configuration du registre de sortie vidéo (RV),_qui est effectuée de sorte que l'affichage se fait soit en mode progressif, soit en mode entrelacé ;
- une étape (E2) d'écriture de *n* images dans la mémoire vive (MV), *n* étant un entier supérieur ou égal à deux, les n images formant, lorsqu'elles sont affichées successivement, l'animation à afficher ;
- une étape (E3) d'écriture dans la mémoire vive (MV) d'une pluralité de noeuds (Ni) de sorte que chaque noeud comprend l'adresse en mémoire vive (MV) d'au moins une trame d'une image parmi les *n* images ainsi que l'adresse en mémoire vive (MV) du noeud suivant, le dernier noeud comprenant l'adresse en mémoire vive (MV) du premier noeud, l'étape E3 étant fonction d'un mode d'affichage choisi lors de l'étape E1 ;
- une étape (E4) de configuration du registre d'affichage (RA) lors de laquelle un noeud de la pluralité de noeuds (Ni) est copié dans le registre d'affichage (RA) ;
et **en ce qu'**il comprend ensuite une deuxième phase de lecture des *n* images par ladite puce d'affichage (PA), la phase de lecture comprenant :
- une étape d'affichage, par la puce d'affichage (PA), de l'image ou la trame d'image dont l'adresse est comprise dans le noeud de la pluralité de noeuds (Ni) chargé dans le registre d'affichage (RA), dit noeud chargé ;
- puis, une fois cette image ou cette trame d'image affichée, une étape de chargement dans registre d'affichage (RA), par la puce d'affichage (PA), du noeud dont l'adresse en mémoire vive (MV) est comprise dans le noeud chargé ;
ces deux étapes répétées de sorte à parcourir la pluralité de noeuds (Ni) et ainsi afficher l'animation obtenue par l'affichage successif des n images.

2. Procédé selon la revendication précédente **caractérisé en ce qu'**un programme de démarrage en charge du démarrage d'un système d'exploitation est stocké dans la mémoire non-volatile (MN), **en ce que** le dispositif électronique (DE) comporte un système élémentaire d'entrée/sortie configuré pour charger en mémoire vive (MV) ledit programme de démarrage et **en ce que** les n images sont incluses dans ledit programme de démarrage de manière que l'étape (E3) d'écriture des n images dans la mémoire vive (MV) se fait lors du chargement dudit programme de démarrage par ledit système élémentaire d'entrée/sortie.

3. Procédé selon la revendication 1 **caractérisé en ce qu'**un programme de démarrage en charge du démarrage d'un système d'exploitation est stocké dans la mémoire non-volatile (MN), **en ce que** le dispositif électronique (DE) comporte un système élémentaire d'entrée/sortie configuré pour charger en mémoire vive (MV) ledit programme de démarrage, **en ce que** les n images sont stockées dans la mémoire non-volatile (MN) et **en ce que** l'étape d'écriture (E3) des n images dans la mémoire vive se fait par copie des images stockées dans la mémoire non-volatile (MN) vers la mémoire vive (MV) par ledit programme de démarrage.

4. Procédé selon l'une des revendications précédentes **caractérisé en ce que** les n images sont stockées sous forme compressée.

5. Procédé selon l'une des revendications précédentes **caractérisé en ce que** l'écriture des n images dans la mémoire vive (MV) se fait dans une zone dédiée de ladite mémoire vive (MV).

6. Procédé selon l'une des revendications précédentes **caractérisé en ce que** la configuration du registre de sortie vidéo (RV) lors de l'étape (E1) de configuration du registre de sortie vidéo (RV) est effectuée de sorte que l'affichage se fait en mode progressif et **en ce que** chaque noeud comprend l'adresse en mémoire vive (MV) d'une image.

7. Procédé selon la revendication précédente **caractérisé en ce que** l'animation est décomposée en un premier plan graphique et un deuxième plan graphique, le premier plan graphique constituant la partie fixe de l'animation et le deuxième plan graphique constituant la partie changeante de l'animation, la puce d'affichage (PA) comportant des moyens pour superposer le premier plan graphique au deuxième plan graphique ; et **en ce que** l'étape (E3) d'écriture dans la mémoire vive (MV) d'une pluralité de noeuds (Ni) comprend deux sous-étapes :
- une première sous-étape d'écriture d'un noeud comprenant l'adresse en mémoire vive (MV) d'une image destinée à être affichée dans le premier plan graphique, le noeud comprenant en outre sa propre adresse en mémoire vive (MV) ;
- une deuxième sous-étape d'écriture d'une pluralité de noeuds (Ni), chaque noeud comprenant l'adresse en mémoire vive (MV) d'une image destinée à être affichée dans le deuxième plan graphique ainsi que l'adresse en mémoire vive (MV) du noeud suivant, le dernier noeud comprenant l'adresse en mémoire vive (MV) du premier noeud.

8. Procédé selon l'une des revendications 1 à 5 **caractérisé en ce que** la configuration du registre de sortie vidéo (RV) lors de l'étape de configuration du registre de sortie vidéo (RV) est effectuée de sorte que l'affichage se fait en mode entrelacé, **en ce que** la pluralité de noeuds (Ni) comporte des noeuds pairs et des noeuds impairs, et **en ce que** chaque noeud impair comprend l'adresse en mémoire vive (MV) d'une trame impaire d'une image et chaque noeud pair comprend l'adresse en mémoire vive (MV) d'une trame paire d'une image.

9. Procédé selon la revendication précédente **caractérisé en ce que** l'animation est décomposée en un premier plan graphique et un deuxième plan graphique, le premier plan graphique constituant la partie fixe de l'animation et le deuxième plan graphique constituant la partie changeante de l'animation, la puce d'affichage (PA) comportant des moyens pour superposer le premier plan graphique au deuxième plan graphique ; et **en ce que** l'étape (E3) d'écriture dans la mémoire vive (MV) d'une pluralité de noeuds (Ni) comprend deux sous-étapes :
- une première sous-étape d'écriture d'un premier noeud et d'un deuxième noeud, le premier noeud comprenant l'adresse en mémoire (MV) vive de la trame impaire d'une image destinée à être affichée dans le premier plan graphique ainsi que l'adresse en mémoire vive (MV) du deuxième noeud, le deuxième noeud comprenant l'adresse en mémoire vive (MV) de la trame paire de l'image destinée à être affichée dans le premier plan graphique ainsi que l'adresse en mémoire vive (MV) du premier noeud ;
- une deuxième sous-étape d'écriture d'une pluralité de noeuds (Ni), chaque noeud impair comprenant l'adresse en mémoire vive (MV) de la trame impaire d'une image destinée à être affichée dans le deuxième plan graphique et chaque noeud pair comprenant l'adresse en mémoire vive (MV) de la trame paire d'une image destinée à être affichée dans le deuxième plan graphique, le dernier noeud comprenant l'adresse en mémoire vive (MV) du premier noeud.

10. Dispositif électronique (DE) comprenant une mémoire non-volatile (MN), une mémoire vive (MV) et une puce d'affichage (PA), ladite puce d'affichage (PA) comportant un registre de sortie vidéo (RV) et un registre d'affichage (RA) ; le dispositif étant **caractérisé en ce qu'**il comprend en outre des moyens pour la mise en oeuvre du procédé selon l'une quelconque des revendications 1 à 9.

11. Produit programme d'ordinateur comprenant des instructions qui conduisent le dispositif selon la revendication 10 à exécuter les étapes du procédé selon l'une des revendications 1 à 9.

12. Support lisible par ordinateur, sur lequel est enregistré le programme d'ordinateur selon la revendication 11.

## Patentansprüche

1. Verfahren zum Anzeigen einer Animation durch einen Anzeigechip (PA) eines elektronischen Geräts (DE), wobei das elektronische Gerät (DE) einen nichtflüchtigen Speicher (MN) und einen Arbeitsspeicher (MV) umfasst, wobei der Anzeigechip (PA) ein Videoausgaberegister (RV) und ein Anzeigeregister (RA) enthält; wobei das Verfahren beim Start des Geräts (DE) ausgeführt wird und **dadurch gekennzeichnet ist, dass** es eine erste Programmierungsphase umfasst, welche umfasst:
- einen Schritt (E1) der Konfiguration des Videoausgaberegisters (RV), welcher derart durchgeführt wird, dass die Anzeige entweder im progressiven Modus oder im Zeilensprung-Modus erfolgt;
- einen Schritt (E2) des Schreibens von n Bildern in den Arbeitsspeicher (MV), wobei n eine ganze Zahl größer oder gleich zwei ist, wobei die n Bilder, wenn sie nacheinander angezeigt werden, die anzuzeigende Animation bilden;
- einen Schritt (E3) des Schreibens einer Mehrzahl von Knoten (Ni) in den Arbeitsspeicher (MV), derart dass jeder Knoten die Arbeitsspeicher-Adresse (MV-Adresse) von zumindest einem Halbbild eines Bildes aus den n Bildern sowie die Arbeitsspeicher-Adresse (MV-Adresse) des nachfolgenden Knotens umfasst, wobei der letzte Knoten die Arbeitsspeicher-Adresse (MV-Adresse) des ersten Knotens umfasst, wobei der Schritt E3 von einem im Schritt E1 ausgewählten Anzeigemodus abhängig ist;
- einen Schritt (E4) der Konfiguration des Anzeigeregisters (RA), bei welchem ein Knoten aus der Mehrzahl von Knoten (Ni) in das Anzeigeregister (RA) kopiert wird;
und dass es anschließend eine zweite Phase umfasst, in welcher die n Bilder von dem Anzeigechip (PA) gelesen werden, wobei die Lesephase umfasst:
- einen Schritt des durch den Anzeigechip (PA) erfolgenden Anzeigens des Bildes oder Halbbilds, dessen Adresse in dem betreffenden Knoten aus der Mehrzahl von Knoten (Ni) enthalten ist, der in das Anzeigeregister (RA) geladen ist, dem sogenannten geladenen Knoten;
- und sobald dieses Bild oder Halbbild angezeigt ist, einen Schritt, bei welchem der Knoten, dessen Arbeitsspeicher-Adresse ((MV-Adresse) im geladenen Knoten enthalten ist, durch den Anzeigechip (PA) in das Anzeigeregister (RA) geladen wird;
wobei beide Schritte solange wiederholt werden, bis die Mehrzahl der Knoten (Ni) durchlaufen ist und die durch die aufeinanderfolgende Anzeige der n Bilder entstandene Animation angezeigt wird.

2. Verfahren nach dem vorhergehenden Anspruch, **dadurch gekennzeichnet, dass** ein für den Start eines Betriebssystems zuständiges Startprogramm in dem nichtflüchtigen Speicher (MN) gespeichert ist, dass das elektronische Gerät (DE) ein elementares Eingabe-/Ausgabesystem enthält, das derart konfiguriert ist, dass es das Startprogramm in den Arbeitsspeicher (MV) lädt, und dass die n Bilder in dem Startprogramm enthalten sind, sodass der Schritt (E3) des Schreibens der *n* Bilder in den Arbeitsspeicher (MV) während des Ladens des Startprogramms durch das elementare Eingabe-/Ausgabesystem erfolgt.

3. Verfahren nach Anspruch 1, **dadurch gekennzeichnet, dass** ein für den Start eines Betriebssystems zuständiges Startprogramm in dem nichtflüchtigen Speicher (MN) gespeichert ist, dass das elektronische Gerät (DE) ein elementares Eingabe-/Ausgabesystem enthält, das derart konfiguriert ist, dass es das Startprogramm in den Arbeitsspeicher (MV) lädt, dass die n Bilder in den nichtflüchtigen Speicher (MN) gespeichert werden, dass der Schritt (E3) des Schreibens der n Bilder in den Arbeitsspeicher dadurch erfolgt, dass die im nichtflüchtigen Speicher (MN) gespeicherten Bilder von dem betreffenden Startprogramm in den Arbeitsspeicher (MV) kopiert werden.

4. Verfahren nach einem der vorhergehenden Ansprüche, **dadurch gekennzeichnet, dass** die n Bilder in komprimierter Form gespeichert sind.

5. Verfahren nach einem der vorhergehenden Ansprüche, **dadurch gekennzeichnet, dass** die Termersetzung der n Bilder im Arbeitsspeicher (MV) in einem dedizierten Bereich des Arbeitsspeichers (MV) erfolgt.

6. Verfahren nach einem der vorhergehenden Ansprüche, **dadurch gekennzeichnet, dass** das Videoausgaberegister (RV) in dem Schritt (E1) der Konfiguration des Videoausgaberegisters (RV) derart konfiguriert ist, dass die Anzeige im progressiven Modus erfolgt und dass jeder Knoten die Arbeitsspeicher-Adresse (MV-Adresse) eines Bildes umfasst.

7. Verfahren nach dem vorhergehenden Anspruch, **dadurch gekennzeichnet, dass** die Animation in eine erste grafische Ebene und in eine zweite grafische Ebene zerlegt wird, wobei die erste grafische Ebene den festen Teil der Animation und die zweite grafische Ebene den veränderlichen Teil der Animation darstellt, wobei der Anzeigechip (PA) Mittel zum Aufeinanderlegen der ersten grafischen Ebene auf die zweite grafische Ebene enthält; und dass der Schritt (E3) des Schreibens einer Mehrzahl von Knoten (Ni) in den Arbeitsspeicher (MV) zwei Teilschritte umfasst:
- einen ersten Teilschritt des Schreibens eines Knotens, der die Arbeitsspeicher-Adresse (MV-Adresse) eines in der ersten grafischen Ebene anzuzeigenden Bildes umfasst, wobei der Knoten ferner seine eigene Arbeitsspeicher-Adresse (MV-Adresse) umfasst;
- einen zweiten Teilschritt des Schreibens einer Mehrzahl von Knoten (Ni), wobei jeder Knoten umfasst: die Arbeitsspeicher-Adresse (MV-Adresse) eines in der zweiten grafischen Ebene anzuzeigenden Bildes, sowie die Arbeitsspeicher-Adresse (MV-Adresse) des nachfolgenden Knotens, wobei der letzte Knoten die Arbeitsspeicher-Adresse (MV-Adresse) des ersten Knotens umfasst.

8. Verfahren nach einem der Ansprüche 1 bis 5, **dadurch gekennzeichnet, dass** die Konfiguration des Videoausgaberegisters (RV) in dem Schritt zur Konfiguration des Videoausgaberegisters (RV) derart durchgeführt wird, dass die Anzeige im Zeilensprung-Modus erfolgt und dass die Mehrzahl von Knoten (Ni) gerade Knoten und ungerade Knoten enthält, und dass jeder ungerade Knoten die Arbeitsspeicher-Adresse (MV-Adresse) eines ungeraden Halbbilds eines Bildes umfasst, und dass jeder gerade Knoten die Arbeitsspeicher-Adresse (MV-Adresse) eines geraden Halbbilds eines Bildes umfasst.

9. Verfahren nach dem vorhergehenden Anspruch, **dadurch gekennzeichnet, dass** die Animation in eine erste grafische Ebene und in eine zweite grafische Ebene zerlegt wird, wobei die erste grafische Ebene den festen Teil der Animation und die zweite grafische Ebene den veränderlichen Teil der Animation darstellt, wobei der Anzeigechip (PA) Mittel zum Aufeinanderlegen der ersten grafischen Ebene auf die zweite grafische Ebene enthält; und dass der Schritt (E3) des Schreibens einer Mehrzahl von Knoten (Ni) in den Arbeitsspeicher (MV) zwei Teilschritte umfasst:
- einen ersten Teilschritt des Schreibens eines ersten Knotens und eines zweiten Knotens, wobei der erste Knoten die Arbeitsspeicher-Adresse (MV-Adresse) des ungeraden Halbbilds eines in der ersten grafischen Ebene anzuzeigenden Bildes sowie die Arbeitsspeicher-Adresse (MV-Adresse) des zweiten Knotens umfasst, wobei der zweite Knoten die Arbeitsspeicher-Adresse (MV-Adresse) des geraden Halbbilds des in der ersten grafischen Ebene anzuzeigenden Bildes sowie die Arbeitsspeicher-Adresse (MV-Adresse) des ersten Knotens umfasst;
- einen zweiten Teilschritt des Schreibens einer Mehrzahl von Knoten (Ni), wobei jeder ungerade Knoten die Arbeitsspeicher-Adresse (MV-Adresse) des ungeraden Halbbilds eines in der zweiten grafischen Ebene anzuzeigenden Bildes umfasst, und wobei jeder gerade Knoten die Arbeitsspeicher-Adresse (MV-Adresse) des geraden Halbbilds eines in der zweiten grafischen Ebene anzuzeigenden Bildes umfasst, wobei der letzte Knoten die Arbeitsspeicher-Adresse (MV-Adresse) des ersten Knotens umfasst.

10. Elektronisches Gerät (DE), das einen nichtflüchtigen Speicher (MN), einen Arbeitsspeicher (MV) und einen Anzeigechip (PA) umfasst, wobei der Anzeigechip (PA) ein Videoausgaberegister (RV) und ein Anzeigeregister (RA) enthält; wobei das Gerät **dadurch gekennzeichnet ist, dass** es ferner Mittel zum Ausführen des Verfahrens nach einem der Ansprüche 1 bis 9 umfasst.

11. Computerprogrammprodukt, das Befehle umfasst, welche das Gerät nach Anspruch 10 dazu veranlassen, die Schritte des Verfahrens nach einem der Ansprüche 1 bis 9 auszuführen.

12. Computerlesbares Speichermedium, auf welchem das Computerprogramm nach Anspruch 11 abgespeichert ist.

## Claims

1. Method for display of an animation by a display chip (PA) of an electronic device (DE), said electronic device (DE) comprising a non-volatile memory (MN) and a random-access memory (MV), said display chip (PA) comprising a video output register (RV) and a display register (RA);
the method being performed when the electronic device (DE) is started and being **characterized in that** it comprises a first static programming phase comprising:
- a step (E1) for configuration of the video output register (RV), which is carried out so that the display is achieved either in progressive mode or interlaced mode;
- a step (E2) for writing n images into the random-access memory (MV), where n is an integer equal to or greater than two, the n images forming, when they are displayed successively, the animation to be displayed;
- a step (E3) for writing a plurality of nodes (Ni) into the random-access memory (MV) such that each node comprises the random-access memory (MV) address of at least a frame of an image from amongst the n images, as well as the random-access memory (MV) address of the following node, where the last node comprises the random access memory (MV) address of the first node, the step E3 being function of a display mode chosen during the step E1;
- a step (E4) for configuration of the display register (RA), during which a node of the plurality of nodes (Ni) is loaded in the display register (RA) ;
and **in that** it then comprises a second phase for reading of the n images by said display chip (PA), the reading phase comprising:
- a display phase, by the display chip (PA), of the image or of the frame of the image whose address is contained in the node of the plurality of nodes (Ni) loaded in the display register (RA), said "loaded node";
- then, once this image or this frame of the image is displayed, a phase of loading into the display register (RA), by the display chip (PA), the node whose address in the random-access memory (MV) is included in the "loaded node";
these two phases being repeated so as to scan the plurality of nodes (Ni) and thus to display the animation obtained by the successive display of the n images.

2. Method according to the previous claim **characterized in that** a starting program which is in charge of starting an operating system is stored in the nonvolatile memory (MN), and **in that** the electronic device (DE) comprises an elementary input/output system configured to load said starting program into the random-access (MV) memory and **in that** the n images are included in said starting program such that the step (E3) for writing the n images into the random-access memory (MV) is carried out during loading of said starting program by said elementary input/output system.

3. Method according to claim 1 **characterized in that** a starting program which is in charge of starting an operating system is stored in the non-volatile memory (MN), **in that** the electronic device (DE) comprises an elementary input/output system configured to load said starting program into the random-access memory (MV), and **in that** the n images are stored in the non-volatile memory (MN) and **in that** the step for writing (E3) the n images into the random access memory is carried out by copying of the images stored in the non-volatile memory (MN) to the random-access memory (MV) by said starting program.

4. Method according to one of the previous claims **characterized in that** the n images are stored in compressed form.

5. Method according to one of the preceding claims **characterized in that** writing of the n images into the random access memory (MV) is carried out in a reserved zone of said random-access memory (MV).

6. Method according to one of the preceding claims **characterized in that** the configuration of the video output register (RV) during the video output register (RV) configuration step (E1) is performed in such a way that the display is carried out in progressive mode and **in that** each node comprises the random-access memory (MV) address of an image.

7. Method according to the preceding claim **characterized in that** the animation is broken down into a first graphics plane and into a second graphics plane, where the first graphics plane constitutes a fixed part of the animation and the second graphics plane constitutes a changing part of the animation, where the display chip (PA) comprises means for superimposing the first graphics plane onto the second graphics plane; and **in that** the step (E3) for writing a plurality of nodes (Ni) into the random-access memory (MV) comprises two sub-steps:
- a first sub-step for writing a node comprising the random-access memory (MV) address of an image intended to be displayed in the first graphics plane, where the node moreover comprises its own address in random access memory (MV) address;
- a second sub-step for writing a plurality of nodes (Ni), each node comprising the random access memory (MV) address of an image intended to be displayed in the second graphics plane as well as the random-access memory (MV) address of the following node, with the last node comprising the random-access memory (MV) address of the first node.

8. Method according to one of claims 1 to 5 **characterized in that** the configuration of the video output register (RV) during the video output register (RV) configuration step is carried out in such a way that the display is made in interlaced mode, **in that** the plurality of nodes (Ni) comprise even nodes and odd nodes, and **in that** each odd node comprises the random-access memory (MV) address of an odd frame of an image and each even node comprises the random access memory address (MV) of an even frame of an image.

9. Method according to the preceding claim **characterized in that** the animation is broken down into a first graphics plane and into a second graphics plane, where the first graphics plane constitutes the fixed part of the animation and the second graphics plane constitutes the changing part of the animation, where the display chip (PA) comprises means for superimposing the first graphics plane onto the second graphics plane; and **in that** the step (E3) for writing a plurality of nodes (Ni) into the random-access memory (MV) comprises two sub-steps:
- a first sub-step for writing a first node and a second node, where the first node comprises the random-access (MV) memory address of the odd frame of an image intended to be displayed in the first graphics plane as well as the random-access memory (MV) address of the second node, where the second node comprises the random access memory (MV) address of the even frame of the image intended to be displayed in the first graphics plane as well as the random access memory (MV) address of the first node;
- a second sub-step for writing a plurality of nodes (Ni), where each odd node comprises the random-access memory (MV) address of the odd frame of an image intended to be displayed in the second graphics plane and each even node comprises the random access memory (MV) address of the even frame of an image intended to be displayed in the second graphics plane, where the last node comprises the random access memory (MV) address of the first node.

10. Electronic device (DE) comprising a non-volatile memory (MN), a random access memory (MV) and a display chip (PA), said display chip (PA) comprising a video output register (RV) and a display register (RA); where the device is **characterized in that** it moreover comprises means for implementing the method according to any of claims 1 to 9.

11. Computer programme product comprising instructions which lead the device according to claim 10 to execute the steps in the method according to any of claims 1 to 9.

12. Support which can be read by a computer on which the computer programme according to claim 11 is recorded.
